(19) Europäisches Patentamt
European Patent Office
Office européen des brevets

(11) EP 2 257 077 A1

(12) **EUROPEAN PATENT APPLICATION**
published in accordance with Art. 153(4) EPC

(43) Date of publication:
01.12.2010 Bulletin 2010/48

(51) Int Cl.:
*H04N 17/00* (2006.01)   *H04N 7/30* (2006.01)

(21) Application number: 09721820.0

(86) International application number:
PCT/JP2009/055681

(22) Date of filing: 23.03.2009

(87) International publication number:
WO 2009/116667 (24.09.2009 Gazette 2009/39)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 21.03.2008 JP 2008074576
24.02.2009 JP 2009041462

(71) Applicant: Nippon Telegraph and Telephone
Corporation
Chiyoda-ku
Tokyo 100-8116 (JP)

(72) Inventors:
• WATANABE, Keishiro
Musashino-shi
Tokyo 180-8585 (JP)
• OKAMOTO, Jun
Musashino-shi
Tokyo 180-8585 (JP)
• YAMAGISHI, Kazuhisa
Musashino-shi
Tokyo 180-8585 (JP)

(74) Representative: Samson & Partner
Widenmayerstrasse 5
80538 München (DE)

(54) **METHOD, DEVICE, AND PROGRAM FOR OBJECTIVELY EVALUATING VIDEO QUALITY**

(57) A motion vector or DCT coefficient which exists in the bit string of an encoded video and serves as a parameter representing the difference between scenes, or encoding control information or pixel information obtained by partially decoding the bit string of the encoded video is used for video quality objective assessment. It is consequently possible to save the amount of pixel information decoding processing that requires an enormous amount of calculation as compared to video quality objective assessment apparatus using pixel information obtained by decoding the bit string of an entire video. This allows to perform video quality objective assessment in a short time using an inexpensive computer.

FIG.1

EP 2 257 077 A1

**Description**

Technical Field

The present invention relates to a video quality objective assessment technique of detecting degradation of video quality caused by loss of video data and, more particularly, to a video quality objective assessment method, video quality objective assessment apparatus, and program, which, when estimating quality (subjective quality) experienced by a person who has viewed a video, objectively derive subjective quality from the encoded bit string information of a video viewed by a user without conducting subjective quality assessment experiments in which a number of subjects assess quality by actually viewing a video in a special laboratory.

Background Art

There have conventionally been examined techniques of, in case of loss in an encoded video bit string that is being transmitted or stored, assessing video quality using parameter information of video encoding or IP communication (Masataka Masuda, Toshiko Tominaga, and Takanori Hayashi, "Non-intrusive Quality Management for Video Communication Services by using Invalid Frame Rate", Technical Report of IEICE, CQ2005-59, pp. 55-60, Sept. 2005 (reference 1)) and ITU-T G.1070, "Opinion model for video-telephony applications", Apr. 2007 (reference 2), or a technique of decoding an encoded video bit string up to pixel signals and objectively assessing video quality based on the pixel information (ITU-T J.144, "Objective perceptual video quality measurement techniques for digital cable television in the presence of a full reference", Feb. 2000 (reference 3)).

Disclosure of Invention

Problems to be Solved by the Invention

The technique described in reference 1 or 2 estimates the average subjective quality of several scenes assumed by an assessor. In an actual video, however, since the bit string composition largely changes between scenes, loss in a bit string causes large variations in subjective quality between video scenes. Hence, in the technique of reference 1 or 2, it is difficult to take the difference between video scenes into consideration, and a problem lies in realizing a high estimation accuracy. In addition, when estimating subjective quality using the parameter information of IP communication, the use of a protocol other than that for IP communication makes subjective quality estimation impossible.
Reference 3 attempts to estimate subjective quality using the pixel information of a video obtained by decoding the bit string of an encoded video.
However, since an enormous amount of calculation is necessary for decoding to pixel information, the calculation amount required for real-time subjective quality estimation is very large, and the manufacturing cost per apparatus rises. It is therefore difficult to mount the apparatus in a user's video reproduction terminal (set-top box) or the like that needs to be inexpensive.

Means of Solution to the Problem

In order to solve the above problems, according to the present invention, a method of estimating subjective quality when loss has occurred in the bit string of an encoded video comprises the steps of, when loss has occurred in a bit string encoded by an encoding method using motion-compensated inter-frame prediction and DCT currently in vogue and, more particularly, H.264, analyzing only the bit string or pixel information obtained by partially decoding the bit string and detecting a region where a degradation region in the video obtained by decoding the bit string is to be detected, deriving the influence of the degradation region on a human as a weight coefficient, estimating the effect of degradation concealment processing that a decoder makes it hard for a human to detect degradation in the video when decoding the video, detecting the I/P/B attribute of a frame/slice/motion vector in which degradation has occurred, deriving a value representing a degradation intensity in a single frame of the video by collectively considering these pieces of information, deriving a degradation intensity in a single frame for all frames and deriving the representative value of degradation of all frames caused by the lost bit string by collectively considering the degradation intensities, estimating subjective quality for encoding degradation, and estimating general subjective quality based on both the subjective quality for encoding degradation and the representative value of degradation of all frames caused by the lost bit string.
More specifically, according to the present invention, there is provided a video quality objective assessment method of estimating subjective quality representing video quality experienced by a viewer who has viewed a video, if loss has occurred in the bit string of a video encoded using motion compensation and DCT, the influence of the difference between scenes on the subjective quality is taken into consideration using a lost bit string and a remaining bit string, and the subjective quality is estimated without requiring complete decoding.

When loss has occurred in the bit string, the subjective quality is estimated using spatial or time-series position information of a lost frame (or a slice, macroblock, or sub macroblock) in the lost bit string.

If loss has occurred in the bit string of a reference frame (or a slice, macroblock, or sub macroblock) to be referred by another frame (or a slice, macroblock, or sub macroblock) in the motion compensation function, the subjective quality is estimated considering loss given to another frame (or a slice, macroblock, or sub macroblock) by the loss of the bit string of the reference frame (or a slice, macroblock, or sub macroblock).

Subjective quality degraded by encoding processing is defined as the maximum value of subjective quality in case of loss of the bit string.

As the representative value of degradation that has occurred in a single frame, a value obtained by weighting the sum of the number of blocks with bit string loss is used for video quality objective assessment.

In this case, the representative value of degradation that has occurred in a single frame is derived for all frames of the video, and a value obtained by weighting the sum is used for video quality objective assessment.

The weight to be used for video quality objective assessment is determined in accordance with the statistic of motion vector data, the statistic of degradation concealment processing to be performed by a video reproduction terminal, the statistic of a position where degradation has occurred, or the statistic of DCT coefficients, or the statistic of local pixel information, or a combination thereof.

Note that as the statistic of motion vector data, a statistic concerning the magnitude or direction of motion vectors of all or some of macroblocks in the frame is used.

As the statistic of DCT coefficients, the statistic of DCT coefficients of all or some of macroblocks in the frame is used. A subjective quality improvement amount by various kinds of degradation concealment processing is measured by conducting a subjective quality assessment experiment in advance, and a database is created. When objectively assessing the video quality, the database is referred to, and subjective quality tuned to each degradation concealment processing is estimated.

The subjective quality improvement amount by the degradation concealment processing is estimated using the bit string of the encoded video or information decoded as local pixel signals.

As local pixel information, the pixel information of a macroblock adjacent to a macroblock included in the lost bit string is used.

According to the present invention, if loss has occurred in the bit string, and the information preserved in the lost bit string is encoding control information, the subjective quality is estimated in accordance with the degree of influence inflicted on the subjective quality by the encoding control information.

When objectively assessing the video quality, an assessment expression is optimized in accordance with the encoding method, frame rate, or video resolution.

As described above, the bit string of a video using an encoding method by motion-compensated inter-frame prediction and DCT currently in vogue mainly includes motion vectors, DCT coefficients, or encoding control information (for example, quantization coefficients/parameters to control quantization). The contents of these pieces of information largely change between video scenes. Hence, using these pieces of information allows to estimate subjective quality in consideration of the difference in video scene. In addition, when not pixel information but information embedded in the bit string is directly used, the calculation amount can largely be reduced because pixel information that requires an enormous calculation amount for acquisition is unnecessary. When acquiring pixel information by partially decoding the bit string of the video, the load slightly increases as compared to the processing using only the information embedded in the bit string. However, the calculation amount can still largely be saved as compared to decoding the entire video. Hence, to take the difference in video scene as pixel information into consideration, the information may be added to estimate the subjective quality. This allows to perform accurate video quality objective assessment in a short time using an inexpensive computer. For example, although viewers generally view different videos in a video service, the subjective quality of each video can be estimated in consideration of the difference. This enables precise support concerning quality for each viewer, or allows the video service carrier's headend to efficiently and inexpensively manage the subjective quality of a video for each channel or each scene. As it is necessary to only acquire a video bit string, video quality objective assessment can be done independently of the protocol used to transmit bit strings. That is, the method can be extended to a communication method other than IP communication, and is therefore applicable to videos transmitted by various communication methods.

Effects of the Invention

According to the present invention, in case of loss in encoded bit string, the bit string information of the encoded video is used. This makes it possible to efficiently and accurately estimate subjective quality, and consequently, obviates the necessity of much labor and time by replacing the subjective quality assessment method or the conventional objective quality assessment method with the present invention. It is therefore possible to acquire subjective quality sensed by a user on a large scale and in real time.

Brief Description of Drawings

Fig. 1 is a block diagram showing the arrangement of a video quality objective assessment apparatus according to the present invention;
Fig. 2 is a flowchart illustrating the schematic operation of each function unit of the video quality objective assessment apparatus;
Fig. 3 is a view showing a macroblock decoding state in a frame;
Fig. 4 is a view for explaining an edge estimation method in a loss macroblock;
Fig. 5 is a view showing the edge representative values of a loss macroblock and an adjacent macroblock;
Fig. 6 is a view for explaining an edge estimation method in a loss macroblock;
Fig. 7 is a view showing 3D expression of $8 \times 8$ DCT coefficients;
Fig. 8 is a view showing 2D expression of $8 \times 8$ DCT coefficients;
Fig. 9 is a view showing relative positions from a motion vector deriving target frame;
Fig. 10 is a view showing an example in which a motion vector is projected to a frame immediately behind the motion vector deriving target frame;
Fig. 11 is a view showing an example in which a motion vector is projected to a frame immediately ahead of the motion vector deriving target frame;
Fig. 12 is a view showing the state of a motion vector deriving target frame near a loss macroblock;
Fig. 13 is a view for explaining the orientation of a motion vector;
Fig. 14 is a view for explaining the definition of a region of interest;
Fig. 15 is a view showing the coordinate system of macroblocks in a frame;
Fig. 16 is a block diagram showing the hardware configuration of the video quality objective assessment apparatus;
Fig. 17 is a view showing degraded blocks and adjacent blocks in a frame; and
Fig. 18 is a view for explaining a method of estimating the effect of degradation concealment processing in the temporal direction.

Best Mode for Carrying Out the Invention

An embodiment of the present invention will now be described with reference to the accompanying drawings.

(First Embodiment)

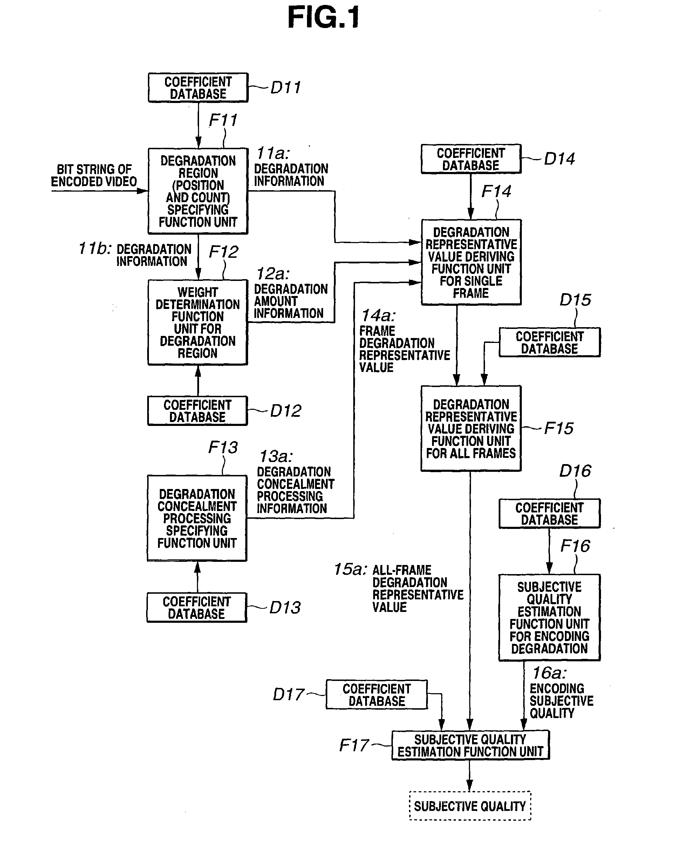

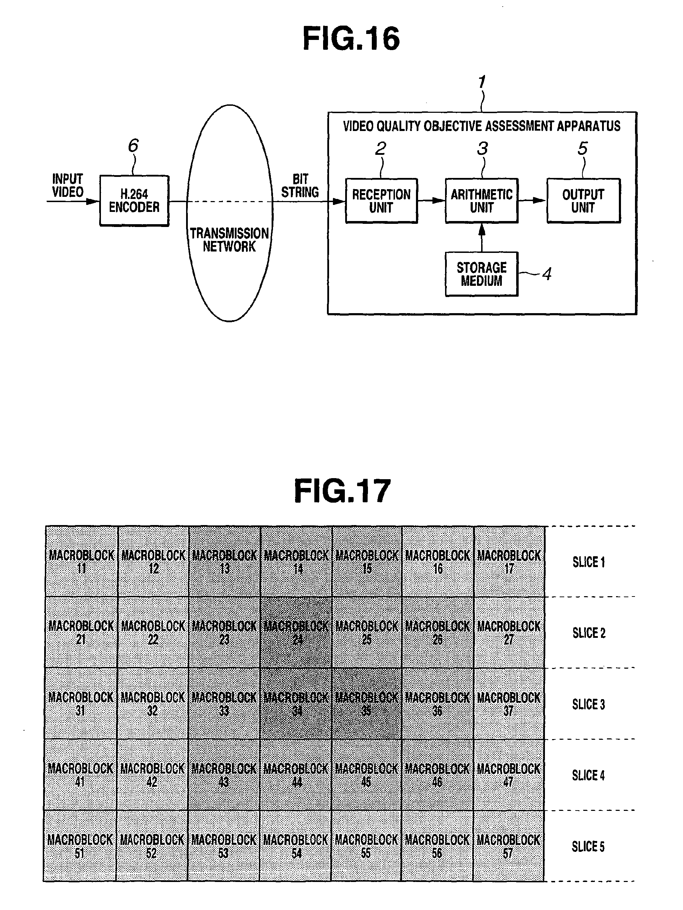

A video quality objective assessment apparatus according to this embodiment is formed from an information processing apparatus including an interface to be used to input the bit string of an encoded video, an arithmetic device such as a server apparatus or a personal computer, and a storage device. The video quality objective assessment apparatus inputs the bit string of an encoded video, and outputs subjective quality corresponding to the input video. The hardware configuration includes a reception unit 2, arithmetic unit 3, storage medium 4, and output unit 5, as shown in Fig. 16. An H.264 encoder 6 shown in Fig. 16 encodes an input video by H.264 to be described later. The encoded video bit string is distributed through the transmission network as transmission data and transmitted to a video quality objective assessment apparatus 1.
The reception unit 2 of the video quality objective assessment apparatus 1 receives the transmission data, i.e., the encoded bit string. The CPU reads out and executes a program stored in the storage medium 4, thereby implementing the functions of the arithmetic unit 3. More specifically, the arithmetic unit 3 performs various kinds of arithmetic processing using the information of the bit string received by the reception unit 2, and outputs the arithmetic processing result to the output unit 5 such as a display unit, thereby estimating the subjective quality of the video.
More specifically, the arithmetic unit 3 has, as its arithmetic processing functions, coefficient databases D11 to D17, degradation region specifying function unit F11, weight determination function unit F12 for a degradation region, degradation concealment processing specifying function unit F13, degradation representative value deriving function unit F14 for a single frame, degradation representative value deriving function unit F15 for all frames, subjective quality estimation function unit F16 for encoding degradation, and subjective quality estimation function unit F17, as shown in Fig. 1.
When loss occurs in the bit string of a video encoded by H.264 using motion compensation and DCT, the video quality objective assessment apparatus 1 estimates the subjective quality of the video using the contents of the normal portion and lost portion of the bit string of the encoded video. This is theoretically applicable to an encoding method using motion compensation and DCT.

The function of each function unit of the video quality objective assessment apparatus will be described below in detail with reference to Fig. 1. Each function unit has a necessary memory.

The degradation region (position and count) specifying function unit F11 scans the bit string of an input encoded video. If loss has occurred in the bit string, the degradation region specifying function unit F11 specifies the positions and number of degraded macroblocks as degradation information 11a and 11b in a frame, and outputs the degradation information 11a and 11b to the degradation representative value deriving function unit F14 and the weight determination function unit F12, respectively.

The weight determination function unit F12 for a degradation region scans the degradation information 11b received from the degradation region specifying function unit F11, measures the degree of influence on the subjective quality of each degraded macroblock based on the position of the degraded macroblock and the complexity of motions and patterns of peripheral macroblocks, and outputs degradation amount information 12a to the degradation representative value deriving function unit F14.

The degradation concealment processing specifying function unit F13 switches, depending on the degradation concealment processing to be used, the weight stored in a database or dynamically derived concerning the degree of influence on subjective quality by degradation concealment processing, and outputs it to the degradation representative value deriving function unit F14 as degradation concealment processing information 13a.

The degradation representative value deriving function unit F14 for a single frame derives the representative value of degradation intensity considering the influence of all degraded macroblocks existing in a single frame based on the degradation information 11a, degradation amount information 12a, and degradation concealment processing information 13a output from the function units F11, F12, and F13, and outputs a frame degradation representative value 14a to the degradation representative value deriving function unit F15 for all frames.

The degradation representative value deriving function unit F15 for all frames derives the representative value of degradation intensities of all frames existing in the assessment target video based on the frame degradation representative value 14a output from the degradation representative value deriving function unit F14 for a single frame, sums up the intensities into the degradation intensity of the whole assessment target video, derives the degradation representative value for all frames, and outputs it to the subjective quality estimation function unit F17 as an all-frame degradation representative value 15a.

The subjective quality estimation function unit F16 for encoding degradation derives subjective quality considering only video degradation caused by encoding, and outputs it to the subjective quality estimation function unit F17 as encoding subjective quality 16a. In this case, the subjective quality estimation function unit F17 uses subjective quality degraded by encoding processing as the maximum value of subjective quality. The subjective quality estimation function unit F17 derives subjective quality considering video degradation caused by encoding and loss in the bit string based on the all-frame degradation representative value 15a from the degradation representative value deriving function unit F15 for all frames and the encoding subjective quality 16a from the subjective quality estimation function unit F16 for encoding degradation.

Note that the databases D11, D12, D13, D14, D15, D16, and D17 of coefficients of assessment expressions are attached to the function units F11, F12, F13, F14, F15, F16, and F17, respectively, so as to be used by the function units. The databases D11 to D17 store coefficients to be used to optimize the assessment expressions. The coefficients change depending on the encoding method, resolution, and frame rate of the assessment target video. These coefficients may be determined by performing regression analysis using the assessment expressions based on the result of subjective quality assessment experiments conducted in advance. Alternatively, arbitrary values may be used.

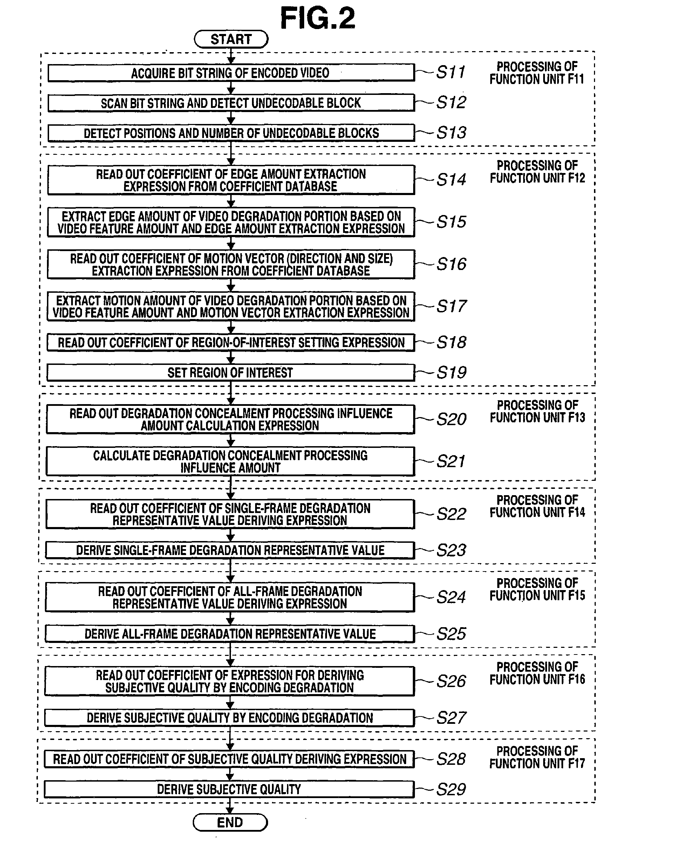

The detailed operation of each function unit of the video quality objective assessment apparatus will be described next mainly with reference to the block diagram of Fig. 1 and the flowchart of Fig. 2 as well as other drawings. Note that all pixel signals and DCT coefficients to be described below are assumed to concern luminance. However, the same processing may be applied to color difference signals.

The degradation region (position and count) specifying function unit F11 needs to receive the encoded bit string of a video, and decode the variable length code of H.264. To do this, an H.264 decoder complying with reference 1 (ITU-T H.264, "Advanced video coding for generic audiovisual services", Feb. 2000.) is used. After decoding, encoding information such as motion vectors, DCT coefficients, and the like used in motion compensation or DCT transform encoding can be acquired for each macroblock or sub macroblock in addition to syntax information such as SPS (Sequence Parameter Set) or PPS (Picture Parameter Set) including control information of H.264 encoding. More specifically, the processing complies with the specifications described in reference 1

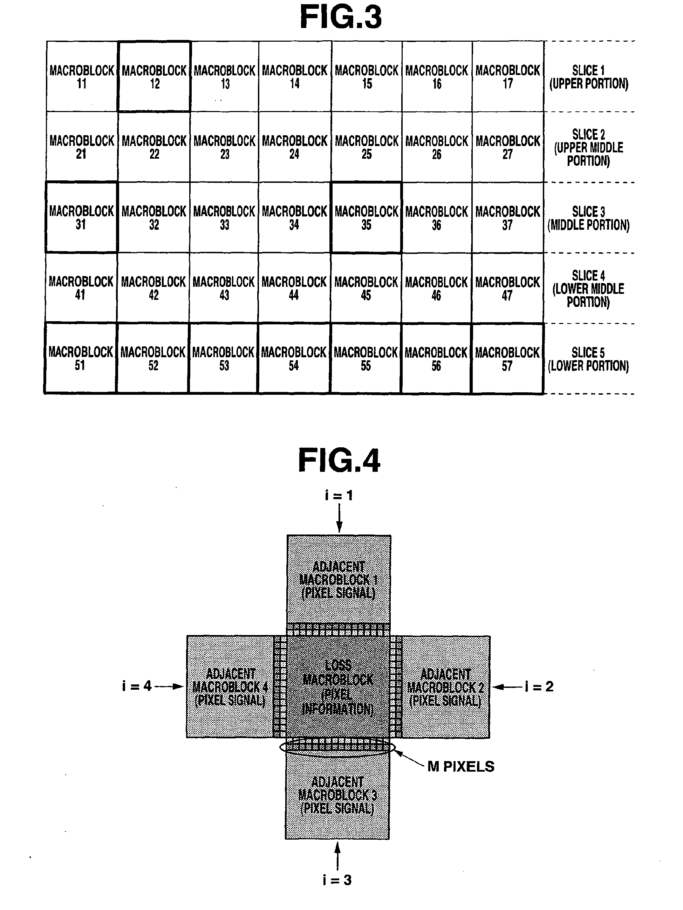

If loss has occurred in the encoded bit string, the function unit F11 cannot normally decode it. It is therefore impossible to normally acquire encoding control information and information such as motion vectors and DCT coefficients to be used to calculate pixel signals in macroblocks or sub macroblocks. Flags to total successes and failures of decoding of macroblocks are prepared in a storage area of the video quality objective assessment apparatus. A flag is set for each macroblock or sub macroblock which has no sufficient data to decode the encoded bit string, thereby obtaining a macroblock decoding success/failure state in a frame, as shown in Fig. 3. In Fig. 3, a block of thin frame represents decoding success, and a block of bold frame represents decoding failure. Blocks 12, 31, and 35 are examples in which information about motion compensation or DCT encoding has been lost. Blocks 51 to 57 are examples in which slice encoding control information has been lost.

Based on the decoding success/failure state as shown in Fig. 3, the positions and number of macroblocks or sub macroblocks degraded due to decoding failures can be detected. In case of loss in encoding control information such as SPS or PPS, all macroblocks in a corresponding sequence (whole assessment target video) are assumed to be lost for SPS, or all macroblocks in a corresponding picture (frame or filed) are assumed to be lost for PPS. The number of macroblocks and the slice shapes in Fig. 3 are merely examples.

When a macroblock or sub macroblock that has failed in decoding is referred to by another macroblock or sub macroblock using the motion estimation function of H.264, the macroblock or sub macroblock which refers to the lost macroblock or sub macroblock also degrades in accordance with the IPB attribute. The IPB attribute is described in reference 1. In case of decoding failure of the reference macroblock or sub macroblock, if the macroblock or sub macroblock which refers to the lost macroblock or sub macroblock belongs to a P frame, a degradation weight $\varepsilon = a_1$ stored in the coefficient database D11 in advance is selected. If the macroblock belongs to a B frame, a degradation weight $\varepsilon = a_2$ is selected. For an I frame, intra-frame prediction is used in H.264. Hence, in case of decoding failure of the reference macroblock or sub macroblock, a degradation weight $\varepsilon = a_3$ is selected. If prediction is not used, a degradation weight $\varepsilon = a_4$ is selected. This processing allows to specify a macroblock or sub macroblock with loss in the assessment target video.

If loss has occurred in a sub macroblock at this point, it is regarded as loss in a macroblock including the sub macroblock. In addition to the positions and number of macroblocks degraded due to decoding failures, the encoded bit string of the video and the weight $\varepsilon$ are output to the degradation representative value deriving function unit F14 and the weight determination function unit F12 as the degradation information 11a and 11b.

The weight determination function unit F12 for degradation region receives the degradation information 11b, and outputs a weight parameter representing the degradation region to be described below. A function of measuring a change in the degree of influence on the subjective quality of a degraded macroblock based on video pattern complexity will be described.

First, a case in which pixel signals can partially be acquired will be explained. Pixel signals can be acquired by applying not only the control information of H.264 encoding but also motion vectors and DCT coefficients to be used for motion compensation and DCT transform encoding to the algorithm described in reference 1.

More specifically, only pixel signals of macroblocks on the upper, lower, left, and right sides of a loss macroblock are acquired in accordance with reference 1 described above. Representative indices of video pattern complexity are the magnitudes and directions of edges obtained using a Sobel filter. In this case, assuming that the presence/absence of an edge in a degraded macroblock makes subjective quality vary, it is estimated whether an edge continuously exists from a macroblock adjacent to a degraded macroblock to the degraded macroblock.

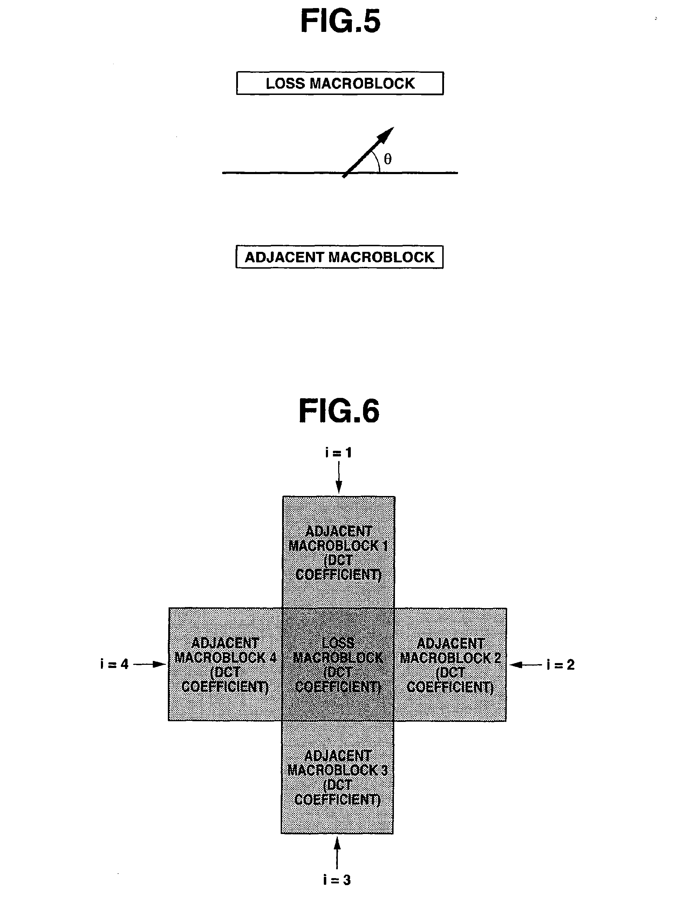

This will be described in detail with reference to Figs. 4 and 5. Fig. 4 shows a degraded macroblock and four adjacent macroblocks. Each adjacent macroblock has a line of pixels (a line of pixels indicated by open squares in Fig. 4) at the boundary to the degraded macroblock. A next line of pixels (the second line of pixels counted from the boundary between the degraded macroblock and the adjacent macroblock in adjacent macroblocks: a line of pixels indicated by full squares in Fig. 4) is used for edge detection by a Sobel filter. When the Sobel filter is used, an edge is derived as an amount having a magnitude and direction, i.e., a vector amount. An edge obtained by the edge deriving target pixel line of each adjacent macroblock is defined by

[Mathematical 1]

$$\vec{E}_j^{\,i} \quad (1 \leq i \leq 4,\ 1 \leq j \leq m)$$

where i is the identifier of an adjacent macroblock (corresponding to macroblocks 1 to 4 in Fig. 4), j is the number of pixels that exist at the boundary between the degraded macroblock and the adjacent macroblock, and m is the number of pixels that exist in the edge deriving target pixel line by the Sobel filter. The representative value of the edge derived by the edge deriving target pixel line by the Sobel filter in each adjacent macroblock, which is given by

[Mathematical 2]

$$\vec{E}^i \quad \text{(to be referred to as a vector E\{i\} hereinafter.}$$

Note that $\vec{E}^i_j$ will be referred to as a vector E{i}$_j$, and will be referred to as a vector E)

is derived by

[Mathematical 3]

$$\left|\vec{E}^i\right| = \max_{j=1}^{j=m}\left(\left|\vec{E}^i_j \sin\theta\right|\right) \cdot$$

The operator

[Mathematical 4]

$$\max_{j=1}^{j=m} A_j \quad \text{(to be referred to as maxA}_j \text{ hereinafter)}$$

outputs a maximum value by referring to natural numbers $A_l$ to $A_m$, where $\theta$ is the angle of a vector E{i}j with respect to the interface (indicated by the solid line in Fig. 5) between the degraded macroblock and the adjacent macroblock, as shown in Fig. 5. Setting is done here using the operator max so as to output a vector having the maximum magnitude. Instead, an arbitrary statistic such as a minimum value, average value, or variance may be used.

In addition, the representative value (i.e., vector E) of vectors E{i} derived in the adjacent macroblocks is derived by

[Mathematical 5]

$$\left|\vec{E}\right| = \mu \times \max_{i=1}^{i=4}\left(\left|\vec{E}^i\right|\right)$$

where $\mu$ is a coefficient stored in the database D12. Setting is done here using the operator max so as to output a vector having the maximum magnitude. Instead, an arbitrary statistic such as a minimum value, average value, or variance may be used. However, if an adjacent macroblock is degraded or nonexistent, it is not used to derive the representative value (i.e., vector E). If no vector E{i} can be derived in all adjacent macroblocks, the absolute value of the vector E is defined as an arbitrary constant (for example, 0) stored in the database D12. This allows to measure the influence of video pattern complexity on the subjective quality of each of degraded macroblocks existing in a single frame.

The function of measuring a change in the degree of influence on the subjective quality of a degraded macroblock based on video pattern complexity will be explained by exemplifying a second case in which only the bit string information of an encoded video is usable. As in the first case, assuming that the presence/absence of an edge in a degraded macroblock makes subjective quality vary, it is estimated whether an edge continuously exists from a macroblock adjacent to a degraded macroblock to the degraded macroblock. This will be described in detail with reference to Figs. 6, 7, and 8.

Fig. 6 shows a degraded macroblock and four adjacent macroblocks. Although Fig. 6 is similar to Fig. 4, each macroblock in Fig. 4 is formed from pixel information while each macroblock in Fig. 6 is formed from DCT coefficients. If each adjacent macroblock in Fig. 6 belongs to an I slice or I frame, processing to be described below is directly executed. However, if the adjacent macroblocks include a macroblock of P attribute or B attribute, a macroblock of I attribute located at the same spatial position in the frame so as to be closest in time series may be used as an alternative, or processing may be continued without any alternative.

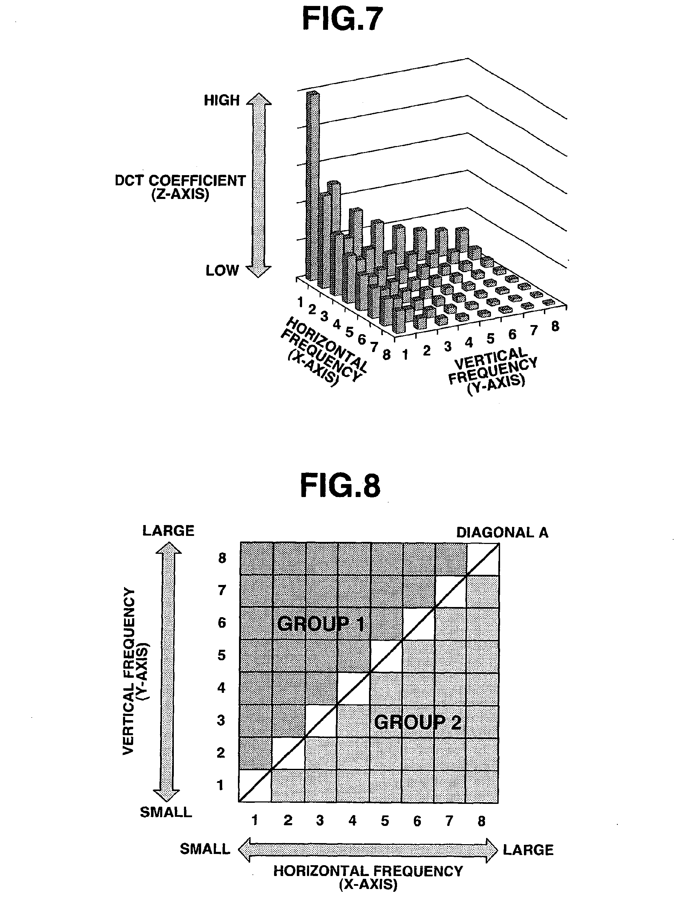

More specifically, examples of DCT coefficients of each macroblock are arranged, as shown in Fig. 7. The x-axis represents the horizontal frequency, the y-axis represents the vertical frequency, and the z-axis represents the DCT coefficient. Note that Fig. 7 illustrates a case in which DCT is applied to an $8 \times 8$ pixel block. When DCT is applied to a $4 \times 4$ pixel block, both the horizontal frequency and the vertical frequency vary in an integer value range from 1 to 4. When DCT is applied to a $16 \times 16$ pixel block, both the horizontal frequency and the vertical frequency vary in an integer value range from 1 to 16. That is, when DCT is applied to an $n \times n$ pixel block, both the horizontal frequency and the vertical frequency vary in an integer value range from 1 to n.

Fig. 8 is a view showing the horizontal frequencies along the x-axis and the vertical frequencies along the y-axis in Fig. 7. In Fig. 8, a DCT coefficient group that exists on the upper side of a DCT coefficient group on a diagonal A where the x- y-axes have identical values is defined as group 1, and a DCT coefficient group that exists on the lower side is defined as group 2. Group 1 represents a region where the vertical frequency is higher than the horizontal frequency, i.e., a region where a horizontal edge is stronger than a vertical edge. Group 2 represents a region where the horizontal frequency is higher than the vertical frequency, i.e., a region where a vertical edge is stronger than a horizontal edge.

Coordinates in Fig. 8 are represented by (horizontal frequency, vertical frequency). Letting Dpq be the DCT coefficient at coordinates (p,q), the strength of a vertical edge $E_v$ (i.e., vector $E_v$) given by

$$\left| \vec{E}_v \right|$$

to be referred to as the absolute value of the vector Ev hereinafter. Note that $\left| \vec{E}_h \right|$ will be referred to as the absolute value of a vector $E_h$, and $\left| \vec{E} \right|$ will be referred to as the absolute value of the vector E)

and the absolute value of a horizontal edge $E_h$ (i.e., vector $E_h$) are calculated, where n indicates that the edge deriving target macroblock includes $n \times n$ pixels.

[Mathematical 7]

$$\left| \vec{E}_h \right| = \sum_{q=2}^{n} \sum_{p=1}^{q-1} \left( \frac{q}{p} D_{pq} \right) \quad * \quad \text{DCT coefficients of group 1 are used}$$

$$\left| \vec{E}_v \right| = \sum_{p=2}^{n} \sum_{q=1}^{p-1} \left( \frac{p}{q} D_{pq} \right) \quad * \quad \text{DCT coefficients of group 2 are used}$$

Using the edge strength deriving processing, the absolute value of the vectors $E_v$ is derived in adjacent macroblocks 1 and 3 in Fig. 6. The absolute value of the vectors $E_h$ is derived in adjacent macroblocks 2 and 4 in Fig. 6. The strengths of these edges are defined as the representative value vector E{i} of the strengths of edges of the adjacent macroblocks, where i is the identifier ($1 \leq i \leq 4$) of an adjacent macroblock. In addition, the representative value vector E of the vector E{i} derived in each adjacent macroblock is derived by

[Mathematical 8]

$$\left|\vec{E}\right| = \mu \times \max_{i=1}^{i=4} \left|\vec{E}^i\right|$$

where $\mu$ is a coefficient stored in the database D12. Setting is done here using the operator max so as to output a vector having the maximum magnitude. Instead, an arbitrary statistic such as a minimum value, average value, or variance may be used. However, if an adjacent macroblock is degraded or nonexistent, the adjacent macroblock is not used to derive the vector E. If no vector E{i} can be derived in all adjacent macroblocks, the absolute value of the vector E is defined as an arbitrary constant (for example, 0) stored in the database D12. This allows to measure the level of influence of video pattern complexity on the subjective quality of each of degraded macroblocks existing in a single frame.

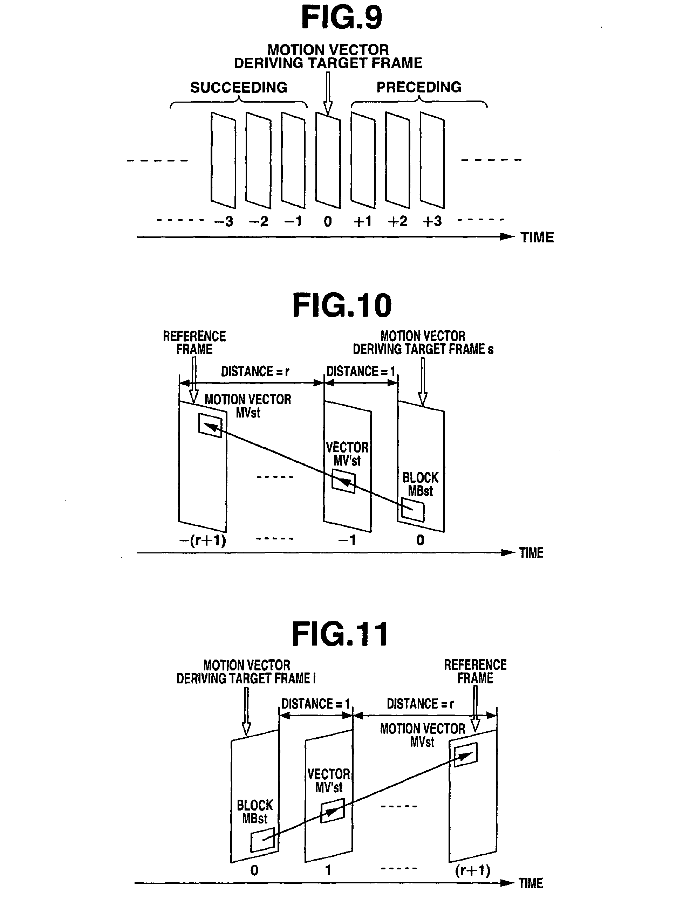

For the weight determination function unit F12 for degradation region, a function of measuring the influence of the magnitude of motion of each macroblock around a degraded macroblock on subjective quality will be described next. The influence of the magnitude of motion on the subjective quality is determined based on the representative value of motion vectors. A method of deriving the representative values of motion vectors will be described with reference to Figs. 9, 10, 11, and 12.

A method of deriving the representative value of motion vectors in an entire frame will be explained first. As shown in Fig. 9, in H.264, two arbitrary reference frames, which need not always be preceding and succeeding frames, can be selected for each macroblock/sub macroblock so as to be used to derive a motion vector. This is theoretically applicable to a bidirectional frame of MPEG2 or MPEG4. Normalization is performed to make the magnitudes of motion vectors set for macroblocks/sub macroblocks comparable between the blocks. The motion vector of each macroblock/sub macroblock is projected to one of the preceding frames and one of the succeeding frames of the motion vector deriving target frame. Detailed processing will be explained with reference to Figs. 10 and 11.

Fig. 10 illustrates a case in which the reference frame of a tth block $MB_{st}$ in a motion vector deriving target frame s is the (r+1)th frame behind the frame s. As shown in Fig. 10, a motion vector given by

[Mathematical 9]

$$\vec{MV}_{st} \quad \text{(to be referred to as a vector } MV_{st}$$

hereinafter)

(to be referred to as a vector $MV_{st}$ hereinafter) exists from the motion vector deriving target frame s to the reference frame. The vector $MV_{st}$ is projected onto a vector $MV'_{st}$ of the first frame behind the motion vector deriving target frame s by

[Mathematical 10]

$$\vec{MV}'_{st} = \frac{1}{r+1} \vec{MV}_{st}$$

Fig. 11 illustrates a case in which the reference frame of the tth block $MB_{st}$ in the motion vector deriving target frame s is the (r+1)th frame ahead of the frame s. As shown in Fig. 11, the motion vector $MV_{st}$ exists from the motion vector deriving target frame s to the reference frame. The vector $MV_{st}$ is projected onto the vector $MV'_{st}$ of the first frame ahead of the motion vector deriving target frame s by

[Mathematical 11]

$$\vec{MV}'_{st} = \frac{1}{r+1} \vec{MV}_{st}$$

With the above processing, a motion vector set for each macroblock/sub macroblock t ($1 \leq t \leq x$) of the motion vector deriving target frame s can be projected onto a vector on the $(s \pm 1)$th frame, where x is the number of blocks in the frame s. Note that if there are two reference frames of the motion vector deriving target frame s, motion vectors projected by the above-described processing are derived for both reference frames, and the average vector is defined as $MV'_{st}$ of each block of the motion vector deriving target frame s.

Using the thus derived vector $MV'_{st}$ on the motion vector deriving target frame s, the average of the magnitudes of vectors is derived as the statistic of the motion vector deriving target frame s by the following equation. Other than the average, various kinds of statistics such as a maximum value, minimum value, standard deviation, and variance are usable as an alternative. In the following equation,

$$[\text{Mathematical 12}]$$

$$\left| \overrightarrow{MV'_{st}} \right|$$

(to be referred to as the absolute value of the vector MV'st hereinafter)

represents the magnitude of the vector.

$$[\text{Mathematical 13}]$$

$$MV_{ave}(s) = \underset{t=1}{\overset{t=x}{ave}} \left| \overrightarrow{MV'_{st}} \right|$$

The operator

$$[\text{Mathematical 14}]$$

$$\underset{j=1}{\overset{j=m}{ave}} A_j \quad (\text{to be referred to as aveA}_j \text{ hereinafter})$$

outputs an average value by referring to natural numbers $A_l$ to $A_m$.

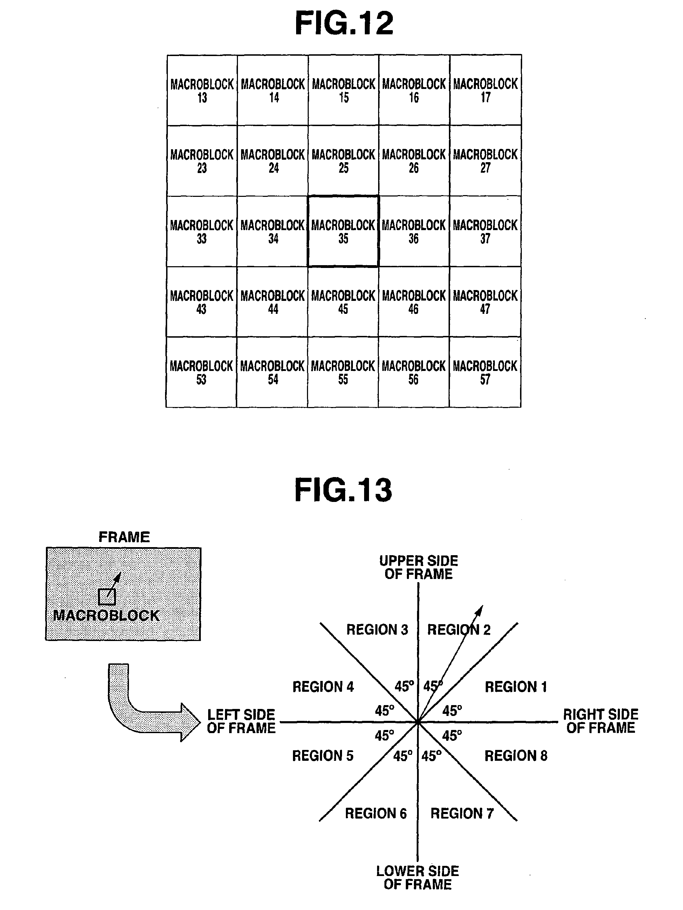

As shown in Fig. 12 (Fig. 12 shows motion vector deriving target macroblocks near a loss macroblock, in which a block of thin frame represents decoding success, and a block of bold frame represents decoding failure), the same processing as that when deriving the motion vector statistic of the entire frame is performed for 24 macroblocks around a degraded macroblock, thereby deriving the representative of motion vectors of the 24 macroblocks, which is given by

$$[\text{Mathematical 15}]$$

$$\overrightarrow{MV}_{ave}^{24} \left( t_d^s \right)$$

(to be referred to as a vector $MV_{ave}$ (t) hereinafter)

for each degraded macroblock. Let T be the number of macroblocks degraded in the frame s.

Using thus obtained $MV_{ave}(s)$ and $MV_{ave}(t)$, a weight representing the degree of influence of the magnitude of motion of a macroblock group existing around the macroblock with loss on the subjective quality of the degraded macroblock is derived by

[Mathematical 16]

$$M^{weight} = \alpha \left| \frac{MV_{ave}(s) - \underset{t_d^s=1}{\overset{T}{ave}}\left(MV_{ave}^{24}\left(t_d^s\right)\right)}{MV_{ave}(s)} \right| + \beta$$

where $\alpha$ and $\beta$ are coefficients stored in the database D12. The average operation by ave in equation (16) can be replaced with a maximum value, minimum value, or any other statistic.
The above-described processing is applied when the loss macroblock has a P or B attribute. For an I attribute, $M^{weight}$ is an arbitrary constant (for example, 1) stored in the database D12. If a macroblock or sub macroblock necessary for calculation is degraded, its presence is neglected, and the statistic is derived from a present macroblock or sub macroblock.

For the weight determination function unit F12 for degradation region, a function of measuring the influence of the direction of motion of each macroblock around a degraded macroblock on subjective quality will be described next. The degree of influence of the direction of motion on the subjective quality is determined based on the representative value of motion vectors. A method of deriving the representative values of motion vectors will be described with reference to Fig. 13.

First, all macroblocks existing in the assessment target video are referred to, and for each macroblock with a motion vector set, which one of regions 1 to 8 includes the macroblock is determined based on Fig. 13. Motion vector 0 is shown as an example. Motion vector 0 exists in region 2. The same processing is applied to all macroblocks in the assessment target video frame. The number of motion vectors existing in each region is counted, and the total number $MVN_{NUM}$ ($1 \leq NUM \leq 8$) of motion vectors existing in each region is derived, where NUM is the identifier of each region. For thus derived $MVN_{NUM}$, a sample variance $\sigma_{MVN}$ of each $MVN_{NUM}$ is derived. Thus obtained $\sigma_{MVN}$ is defined as a weight representing the degree of influence of the direction of motion of a macroblock on the subjective quality of a degraded macroblock.

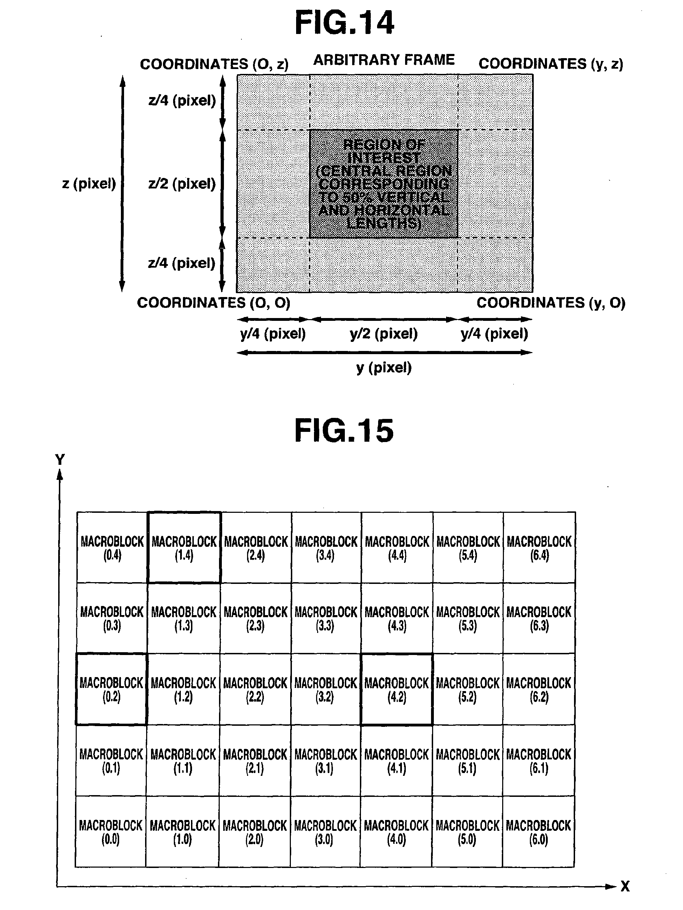

For the weight determination function unit F12 for degradation region, the degree of influence of the occurrence position of a degraded macroblock on the subjective quality of the degraded macroblock will be derived. Fig. 14 shows details. As shown in Fig. 14, a central region corresponding to 50% the vertical and horizontal lengths is set as a region of interest. If a degraded macroblock exists on the region of interest, a weight C representing the degree of influence of the occurrence position of the degraded macroblock on the subjective quality of the degraded macroblock is set as $C = c_1$, and if the degraded macroblock does not exist on the region of interest, $C = c_2$ is set, where $c_1$ and $c_2$ are constants stored in the database D12. The weight C representing the degree of influence of the occurrence position of the degraded macroblock on the subjective quality of the degraded macroblock is calculated for each macroblock of the assessment target video.

The weight determination function unit F12 for degradation region also derives the influence of degradation localization on subjective quality. As shown in Fig. 15 (in Fig. 15, a block of thin frame represents decoding success, and a block of bold frame represents decoding failure), the macroblock coordinate system is formed by plotting X-coordinates rightward and Y-coordinates upward while setting the origin at the lower left point, and the coordinates of each macroblock are expressed as (X,Y). The sample variance of X- and Y-coordinates of a degraded macroblock group is derived, and the influence of degradation localization on subjective quality is calculated by

$$L = fL(\sigma_x, \sigma_y)$$

In this case, $fL(\sigma_x, \sigma_y) = \sigma_x \times \sigma_y$. However, any arbitrary operation other than multiplication may be performed. A degradation localization L is calculated for each frame of the assessment target video. The vector E, $M^{weight}$, $\sigma_{MVN}$, C, and L of each block, which are thus calculated by the weight determination function unit F12 for degradation region, are output to the degradation representative value deriving function unit F14 for a single frame as the degradation amount information 12a.

Details of the degradation concealment processing specifying function unit F13 will be described next. The degradation concealment processing specifying function unit F13 receives information about degradation concealment stored in the database D13, and outputs a parameter representing improvement of subjective quality by degradation concealment processing. A case will be described first in which the influence of degradation concealment processing on subjective quality is determined in accordance with the result of subjective quality assessment experiments. More specifically, the description will be made using Tables 1 and 2.

[Table 1]

| Scene 1 | Without degradation concealment processing | Degradation concealment processing 1 | Degradation concealment processing 2 | ... | Degradation concealment processing N |
|---|---|---|---|---|---|
| Loss pattern 1 | $MOS_{110}$ | $MOS_{111}$ | $MOS_{112}$ | ... | $MOS_{11N}$ |
| Loss pattern 2 | $MOS_{120}$ | $MOS_{121}$ | $MOS_{122}$ | ... | $MOS_{12N}$ |
| ... | ... | ... | ... | ... | ... |
| Loss pattern M | $MOS_{1M0}$ | $MOS_{1M1}$ | $MOS_{1M2}$ | ... | $MOS_{1MN}$ |

(Scene 2: Without degradation concealment, Degradation concealment processing 1 … N; $MOS_{21N}$, $MOS_{22N}$, $MOS_{2MN}$)

(Scene 3: Without degradation concealment, Degradation concealment processing 1 … N; $MOS_{31N}$, $MOS_{32N}$, $MOS_{3MN}$)

[Table 2]

| Scene 1 | Degradation concealment processing 1 | Degradation concealment processing 2 | ... | Degradation concealment processing N |
|---|---|---|---|---|
| Packet loss pattern 1 | $W_{1l1} = MOS_{111}/MOS_{110}$ | $W_{112} = MOS_{112}/MOS_{110}$ | ... | $W_{11N} = MOS_{11N}/MOS_{110}$ |
| Packet loss pattern 2 | $W_{121} = MOS_{12}/MOS_{120}$ | $W_{122} = MOS_{122}/MOS_{120}$ | ... | $W_{12N} = MOS_{12N}/MOS_{120}$ |
| ... | ... | ... | ... | ... |
| Packet loss pattern M | $W_{1M1} = MOS_{1M1}/MOS_{1M0}$ | $W_{1M2} = MOS_{1M2}/MOS_{1M0}$ | | $W_{1MN} = MOS_{1MN}/MOS_{1M0}$ |
| Average | $W_{11} = \sum_{i=1}^{M} W_{1i1}$ | $W_{12} = \sum_{i=1}^{M} W_{1i2}$ | | $W_{1N} = \sum_{i=1}^{M} W_{1iN}$ |

| Scene 2 | Degradation concealment processing 1 | Degradation concealment processing 2 | ... | Degradation concealment processing N |
|---|---|---|---|---|
| Packet loss pattern 1 | $W_{211} = MOS_{211}/MOS_{110}$ | $W_{212} = MOS_{212}/MOS_{110}$ | ... | $W_{21N} = MOS_{21N}/MOS_{110}$ |
| Packet loss pattern 2 | $W_{221} = MOS_{221}/MOS_{120}$ | $W_{222} = MOS_{222}/MOS_{120}$ | ... | $W_{22N} = MOS_{22N}/MOS_{120}$ |
| ... | ... | ... | ... | ... |
| Packet loss pattern M | $W_{2M1} = MOS_{2N1}/MOS_{1M0}$ | $W_{2M2} = MOS_{2M2}/MOS_{1M0}$ | | $W_{2MN} = MOS_{2MN}/MOS_{1M0}$ |
| Average | $W_{21} = \sum_{i=1}^{M} W_{2i1}$ | $W_{22} = \sum_{i=1}^{M} W_{2i2}$ | | $W_{2N} = \sum_{i=1}^{M} W_{2iN}$ |

As shown in Table 1, the respective schemes of degradation concealment processing as an assessment target and processing without application of degradation concealment processing are applied while changing the scene type and the bit string loss pattern, and subjective quality is acquired in each case. As the scale of subjective quality assessment, an absolute scale that assesses the subjective quality of a degraded video as an absolute value is used. In Table 1, Mean Opinion Score (MOS) is used as an example of subjective quality. $MOS_{efg}$ is MOS for a scene e ($1 \le e \le S$), loss pattern f ($1 \le f \le M$), and degradation concealment scheme g ($0 \le g \le N$). In this case, g = 0 means a case in which the degradation concealment is not performed.

A ratio $W_{efg}$ of subjective quality thus acquired under each condition to MOS acquired without applying degradation concealment processing is calculated, as shown in Table 2. $W_{efg}$ represents a subjective quality improvement effect of the degradation concealment scheme g for the scene e ($1 \le e \le S$), data loss pattern f ($1 \le f \le M$), and degradation concealment scheme g ($0 \le g \le N$). For each degradation concealment scheme, the subjective quality improvement effects for the scenes and data loss patterns are averaged. More specifically,

[Mathematical 17]

$$W_g = \frac{1}{SM} \sum_{e=1}^{S} \sum_{f=1}^{M} W_{efg}$$

This value is defined as the representative value of the subjective quality improvement effects of each degradation concealment scheme. A degradation scale (e.g., DMOS) representing subjective quality as the difference from the quality of an original video is also usable as a subjective quality assessment scale. This is derived like the absolute scale, as shown in Tables 3 and 4.

[Table 3]

| Scene 1 | Without degradation concealment processing | Degradation concealment processing 1 | Degradation concealment processing 2 | ... | Degradation concealment processing N |
|---|---|---|---|---|---|
| Packet loss pattern 1 | $DMOS_{110}$ | $DMOS_{111}$ | $DMOS_{112}$ | ... | $DMOS_{11N}$ |
| Packet loss pattern 2 | $DMOS_{120}$ | $DMOS_{121}$ | $DMOS_{122}$ | ... | $DMOS_{12N}$ |
| ... | ... | ... | ... | ... | ... |
| Packet loss pattern M | $DMOS_{1M0}$ | $DMOS_{1M1}$ | $DMOS_{1M2}$ | ... | $DMOS_{1MN}$ |

[Table 4]

| Scene 1 | Degradation concealment processing 1 | Degradation concealment processing 2 | ... | Degradation concealment processing N |
|---|---|---|---|---|
| Packet loss pattern 1 | $W_{111} = DMOS_{111}/DMOS_{110}$ | $W_{112} = DMOS_{112}/DMOS_{110}$ | ... | $W_{11N} = DMOS_{11N}/DMOS_{110}$ |
| Packet loss pattern 2 | $W_{121} = DMOS_{121}/DMOS_{120}$ | $W_{122} = DMOS_{122}/DMOS_{120}$ | ... | $W_{12N} = DMOS_{12N}/DMOS_{120}$ |
| ... | ... | ... | ... | ... |

(continued)

| Scene 1 | Degradation concealment processing 1 | Degradation concealment processing 2 | ... | Degradation concealment processing N |
|---|---|---|---|---|
| Packet loss pattern M | $W_{1M1} = DMOS_{1M1}/DMOS_{1M0}$ | $W_{1M2} = DMOS_{1M2}/DMOS_{1M0}$ | | $W_{1MN} = DMOS_{1MN}/DMOS_{1M0}$ |
| Average | $W_{11} = \sum_{i=1}^{M} W_{1i1}$ | $W_{12} = \sum_{i=1}^{M} W_{1i2}$ | | $W_{1N} = \sum_{i=1}^{M} W_{1iN}$ |

| Scene 2 | Degradation concealment processing 1 | Degradation concealment processing 2 | ··· | Degradation concealment processing N |
|---|---|---|---|---|
| Packet loss pattern 1 | $W_{211} = DMOS_{211}/DMOS_{110}$ | $W_{212} = DMOS_{212}/DMOS_{110}$ | ··· | $W_{21N} = DMOS_{21N}/DMOS_{110}$ |
| Packet loss pattern 2 | $W_{221} = DMOS_{221}/DMOS_{120}$ | $W_{222} = DMOS_{222}/DMOS_{120}$ | ··· | $W_{22N} = DMOS_{22N}/DMOS_{120}$ |
| ... | ... | ... | ··· | ... |
| Packet loss pattern M | $W_{2M1} = DMOS_{2M1}/DMOS_{1M0}$ | $W_{2M2} = DMOS_{2M2}/DMOS_{1M0}$ | | $W_{2MN} = DMOS_{2MN}/DMOS_{1M0}$ |
| Average | $W_{21} = \sum_{i=1}^{M} W_{2i1}$ | $W_{22} = \sum_{i=1}^{M} W_{2i2}$ | | $W_{2N} = \sum_{i=1}^{M} W_{2iN}$ |

In this case, however, the representative value of the subjective quality improvement effects of each degradation concealment scheme is derived in the following way. Wg is selected in accordance with the type of equality assessment scale to be used.

[Mathematical 18]

$$W_g = \frac{1}{\frac{1}{SM} \sum_{e=1}^{S} \sum_{f=1}^{M} W_{efg}}$$

The coefficients used above are stored in the database D13.

Instead of using the database constructed in accordance with the result of subjective quality assessment experiments, the degradation concealment processing specifying function unit F13 may use a method of dynamically estimating the influence of degradation concealment processing on subjective quality for each assessment target video using the bit string of an encoded video or information decoded as pixel signals.

More specifically, the effect of degradation concealment processing and the peripheral edge amounts are known to have correlation. Hence, using the vector E derived in the first or second case of the function of measuring the degree of influence of video pattern complexity on the subjective quality of a degraded macroblock in the weight determination function unit F12 for degradation region, a weight W of a degradation concealment property is calculated by

[Mathematical 19]

$$W = \frac{\omega}{\left|\vec{E}\right|}$$

where ω is a coefficient stored in the database D13 or D12, and W is derived for each macroblock. Only in this case, W may be calculated by the weight determination function unit F12 for degradation region, and output to the degradation representative value deriving function unit F14 for a single frame as the degradation amount information 12a. $W_g$ or W of each macroblock thus derived by the degradation concealment processing specifying function unit F13 is output to the degradation representative value deriving function unit F14 for a single frame as the degradation concealment processing information 13a.

Details of the degradation representative value deriving function unit F14 for a single frame will be described next. The degradation representative value deriving function unit F14 for a single frame receives the outputs 11a, 12a, and 13a from the degradation region (position and count) specifying function unit F11, weight determination function unit F12 for degradation region, and degradation concealment processing specifying function unit F13, and outputs a degradation representative value and degradation localization considering the influence of all degraded macroblocks in a given frame as the frame degradation representative value 14a. More specifically, using a weight function, the frame degradation representative value is derived by

[Mathematical 20]

$$D_f = \tau \times WF_1 \left( \sum_{i=1}^{x} \left( \frac{\varepsilon \times \left|\vec{E(i)}\right| \times M^{weight}(i) \times \sigma_{MVN} \times C_i}{W_g} \right) \right)$$

where τ is a coefficient stored in the database D14, and ε is a weight determined based on whether the reference block has the P attribute, B attribute, or I attribute, and derived by the degradation region (position and count) specifying function unit F11.

[Mathematical 21]

$$\left|\vec{E(i)}\right|$$

(to be referred to as the absolute value of the vector E(i))

is the vector E of the influence of an edge in a degraded macroblock i derived by the weight determination function unit F12 for degradation region on subjective quality, $M^{weight}(i)$ is the influence $W^{weight}$ of the magnitude of motion in the degraded macroblock i derived by the weight determination function unit F12 for degradation region on subjective quality, $\sigma_{MVN}$ is the influence of the direction of motion derived by the weight determination function unit F12 for degradation region on subjective quality, $C_i$ is the influence C of the position of the degraded macroblock i derived by the weight determination function unit F12 for degradation region on subjective quality, and $W_g$ is the subjective quality improvement effect of a degradation concealment scheme k derived by the degradation concealment processing specifying function unit F13. In place of $W_g$,

[Mathematical 22]

$$W = \frac{\omega}{\left|\vec{E(i)}\right|}$$

may be obtained from equation (19) and used, where x is the total number of degraded macroblocks existing in a frame. A weight function $WF_1(w)$ can take an arbitrary function. In this case, for example,

$$WF_1(w) = u_1 * \log(w - u_2) + u_3$$

is used, where $u_1$, $u_2$, and $u_3$ are coefficients stored in the database D14.

The degradation representative value deriving function unit F14 for a single frame also has an optional function of deriving a degradation representative value DS considering the influence of all degraded macroblocks in a given slice based on the outputs 11a, 12a, and 13a from the degradation region (position and count) specifying function unit F11, weight determination function unit F12 for degradation region, and degradation concealment processing specifying function unit F13. More specifically, using the weight function $WF_1(w)$, the degradation representative value DS is derived by

[Mathematical 23]

$$D_S = \tau \times WF_1\left(\sum_{i=1}^{SN}\left(\frac{\varepsilon \times \left|\overrightarrow{E(i)}\right| \times M^{weight}(i) \times \sigma_{MVN} \times C_i}{W_g}\right)\right)$$

where SN is the total number of degraded macroblocks existing in a slice. In place of Wg,
[0106]

[Mathematical 24]

$$W = \frac{\omega}{\left|\overrightarrow{E(i)}\right|}$$

may be used. The frame degradation representative value 14a is output to the degradation representative value deriving function unit F15 for all frames.

Details of the degradation representative value deriving function unit F15 for all frames will be described next. The degradation representative value deriving function unit F15 for all frames receives the degradation representative values and degradation localization of all frames existing in the assessment target video, which are output from the degradation representative value deriving function unit F14 for a single frame, and outputs a degradation representative value D of the assessment target video as the all-frame degradation representative value 15a. Using a weight function $WF_2(w)$, the degradation representative value D is derived by

[Mathematical 25]

$$D = WF_2\left(\sum_{f=1}^{F} L_f D_f\right)$$

where $L_f$ is the influence of degradation localization in a frame f on subjective quality, which is derived by the weight determination function unit F12 for degradation region. The weight function $WF_2(w)$ can take an arbitrary function. In this case, for example,

$WF_2(w) = h_1 * \log(w - h_2) + h_3$

is used, where $h_1$, $h_2$, and $h_3$ are coefficients stored in the database D15, F is the total number of frames existing in the assessment target video. $D_s$ may be used in place of $D_f$. In this case, the degradation representative value D of the assessment target video is derived by

$$[\text{Mathematical } 26]$$

$$D = WF_2 \left( \sum_{S=1}^{ASN} D_S \right)$$

where ASN is the total number of slices existing in the assessment target video. The all-frame degradation representative value 15a is output to the subjective quality estimation function unit F17.

Details of the subjective quality estimation function unit F16 for encoding degradation will be described. The subjective quality estimation function unit F16 for encoding degradation has a function of deriving subjective quality $E_{coded}$ considering only video degradation caused by encoding. The function unit F16 can use an output of an arbitrary conventional method as the encoding subjective quality 16a. $E_{coded}$ may be stored in the database D16, and output as the encoding subjective quality 16a.

Details of the subjective quality estimation function unit F17 which receives the outputs from the degradation representative value deriving function unit F15 for all frames and the subjective quality estimation function unit F16 for encoding degradation, and outputs subjective quality $E_{all}$ considering video degradation caused by encoding and packet loss will be described next. Using a function ev(x,y), the subjective quality estimation function unit F17 derives the subjective quality $E_{all}$ by

$$E_{all} = ev(E_{coded}, D)$$

A function $ev(v_1, v_2)$ can take an arbitrary function. In this case, for example,

$$ev(v_1, v_2) = l_1(v_1/v_2) + l_2$$

is used, where $l_1$ and $l_2$ are coefficients stored in the database D17.

In the above-described way, when loss has occurred in an encoded bit string, the subjective quality of a video can be estimated accurately and efficiently.

(Second Embodiment)

In this embodiment, the same processing as in the first embodiment is performed except a method of deriving a parameter Wg representing the influence of degradation concealment processing. Using $W_{gs}$ representing the influence of degradation concealment processing in the spatial direction and $Wg_T$ representing the influence of degradation concealment processing in the temporal direction, Wg is derived by

$W_g = \omega_1 \times W_{gs} \times W_{gT} + \omega_2 \times W_{gs} + \omega_3 \times W_{gT}$ where $\omega_1$, $\omega_2$, and $\omega_3$ are coefficients stored in a database D13.

A method of deriving $W_{gs}$ representing the influence of degradation concealment processing in the spatial direction will be described with reference to Fig. 17. The number of macroblocks and the slice shapes in Fig. 17 are merely examples.

When deriving $W_{gs}$, focus is placed on peripheral macroblocks (macroblocks 13, 14, 15, 23, 25, 26, 33, 36, 43, 44, 45, and 46 in Fig. 17) that are vertically, horizontally, and obliquely adjacent to the degradation region in a single frame shown in Fig. 17. The similarities between each peripheral macroblock and all adjacent peripheral macroblocks are calculated. In this embodiment, the mean square error of the luminance information of all pixels of two macroblocks is used as the similarity. However, the similarity need not always be derived by this method, and all known similarity deriving algorithms are usable. In this embodiment, more specifically, when macroblock 1 and macroblock 2 exist, the similarity is derived by

[Mathematical 27]

$$S = \sum_{i}^{\text{all pixels in macroblock}} (p_{1i} - p_{2i})^2$$

where $P_{1i}$ and $P_{2i}$ are pixels located at the same spatial position in macroblocks 1 and 2.

Next, the similarities between each peripheral macroblock and all adjacent peripheral macroblocks are derived (for example, for peripheral macroblock 14 in Fig. 17, the similarities with respect to both adjacent peripheral macroblocks 13 and 15 are derived). The similarities derived for each peripheral macroblock with respect to all adjacent peripheral macroblocks are averaged. This value is defined as the similarity representative value of the peripheral macroblock. The similarity representative values of all peripheral macroblocks are averaged to obtain a similarity $S_{frame}$ of a single frame. Letting $N_{frame}$ be the number of degraded macroblocks in the frame, $w_{gs}$ is derived by

[Mathematical 28]

$$W_{gS} = \frac{\omega_4}{\omega_6 \times S_{frame} + \omega_7 \times N_{frame} + \omega_8 \times S_{frame} \times N_{frame}} + \omega_5$$

where $\omega_4$, $\omega_5$, $\omega_6$, $\omega_7$, and $\omega_8$ are coefficients stored in the database D13.

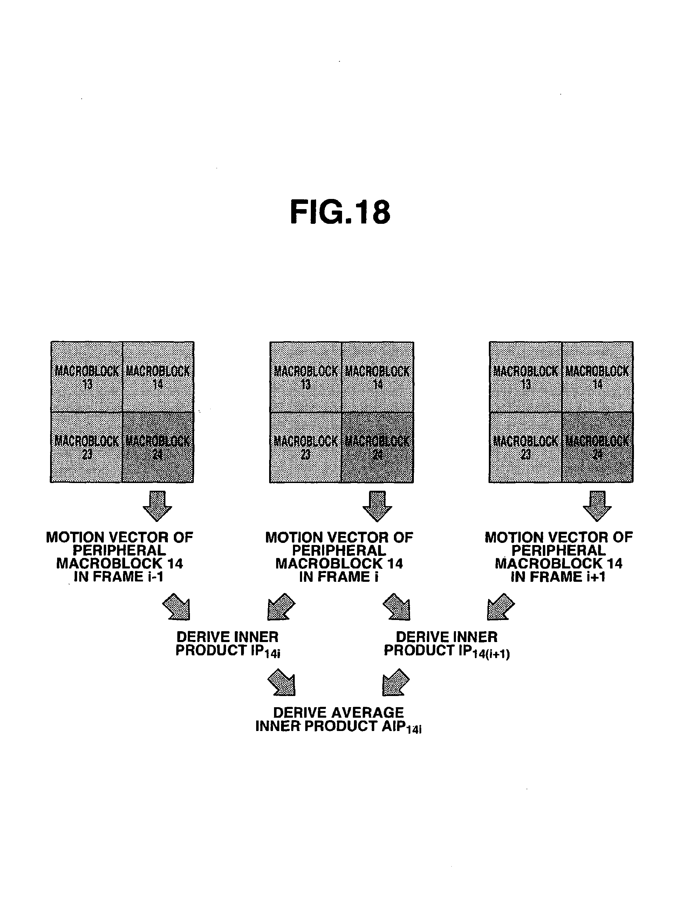

A method of deriving $W_{gT}$ representing the influence of degradation concealment processing in the temporal direction will also be described with reference to Fig. 17. When deriving $W_{gT}$, focus is placed on peripheral macroblocks (macroblocks 13, 14, 15, 23, 25, 26, 33, 36, 43, 44, 45, and 46 in Fig. 17) that are vertically, horizontally, and obliquely adjacent to the degradation region (macroblocks 24, 34, and 35) in a single frame i (ith frame in time series) shown in Fig. 17. Simultaneously, focus is placed on a frame (i-1) and a frame (i+1) before and after the frame i in time series. As shown in Fig. 18 (in Fig. 18, block 24 is a loss block, blocks 13, 14, and 23 are some of the peripheral macroblocks, macroblocks 13, 14, 23, and 24 on the left side are included in the frame (i-1), macroblocks 13, 14, 23, and 24 at the center are included in the frame i, and macroblocks 13, 14, 23, and 24 on the right side are included in the frame (i+1)), the magnitude and direction of a motion vector are calculated for each peripheral macroblock of the frame i. Simultaneously, the directions and magnitudes of motion vectors at the same spatial positions as those of the peripheral macroblocks of the frame i are detected for the frames (i-1) and (i+1). This processing is performed in accordance with reference 1.

For the motion vectors of the frames (i-1) and (i+1), the inner product of the motion vectors of the peripheral macroblocks of the frame i is calculated.

for example, for peripheral macroblock 14 in Fig. 17, $IP_{14i}$ and $IP_{14(i+1)}$ are derived. $AIP_{14i}$ is derived as the average value of $IP_{14i}$ and $IP_{14(i+1)}$. The magnitudes of motion vectors to be used to calculate the inner product may uniformly be set to 1. Similarly, $AIP_{\Delta i}$ ($\Delta$ is a peripheral macroblock number) is calculated for all peripheral macroblocks in the frame i. The average value of $AIP_{\Delta i}$ of all peripheral macroblocks is defined as $W_{gT} = AIP_i$ representing the influence of degradation concealment processing in the temporal direction of the frame i. If, in the frames (i-1) and (i+1), no motion vector is set for a macroblock spatially corresponding to a peripheral macroblock of the frame i, or the motion vector is lost, $W_{gT}$ is calculated by regarding the motion vector of the macroblock as a 0 vector. In this embodiment, the motion vectors to be used to calculate the inner product are calculated from the frames before and after a degraded frame. Instead, the motion vectors to be used to calculate the inner product may be calculated from two arbitrary frames.

Note that $W_{gs}$ and $W_{gT}$ are values that are recalculated for each degraded frame.

**Claims**

1. A video quality objective assessment
   method of estimating subjective quality of a video experienced by a viewer who has viewed the video,
   thereby objectively assessing quality of the video, comprising the steps of:

   receiving a bit string of the video encoded using motion compensation and DCT;
   if loss has occurred in the received bit string of the video, performing a predetermined operation using a lost bit string and a remaining bit string; and
   performing an operation of estimating the subjective quality of the video based on an operation result of the step of performing the predetermined operation,

wherein in the step of performing the predetermined operation, one of spatial position information and time-series position information of a lost block preserved in the bit string is extracted, and
in the step of performing the operation of estimating the subjective quality, the subjective quality of the video is estimated based on the extracted spatial position information or time-series position information.

2. A video quality objective assessment method according to claim 1, wherein
in the step of performing the predetermined operation, if loss has occurred in a bit string of a reference block to be referred to by another block using a motion compensation function, loss given to a block which refers to the lost reference block by the loss of the bit string of the reference block is quantified, and
in the step of performing the operation of estimating the subjective quality, the subjective quality of the video is estimated based on the operation result of the step of performing the predetermined operation.

3. A video quality objective assessment method according to claim 1, wherein in the step of performing the predetermined operation, subjective quality degraded by encoding processing is defined as a maximum value of subjective quality in case of loss of the bit string.

4. A video quality objective assessment method according to claim 1, wherein
in the step of performing the predetermined operation, a value obtained by applying a weight to the number of lost blocks of the bit string is calculated as a representative value of degradation that has occurred in a single frame, and
in the step of performing the operation of estimating the subjective quality, the calculated value is used to estimate the subjective quality.

5. A video quality objective assessment method according to claim 4, wherein
in the step of performing the predetermined operation, the representative value of degradation that has occurred in a single frame is derived for all frames of the video, and a value is calculated by applying a weight to the representative values, and
in the step of performing the operation of estimating the subjective quality, the calculated value is used to estimate the subjective quality.

6. A video quality objective assessment method according to claim 4 or 5, wherein in the step of performing the predetermined operation, the weight to be used to estimate the subjective quality is determined in accordance with a statistic of one of motion vector data, degradation concealment processing to be performed by a video reproduction terminal, a position where degradation has occurred, and DCT coefficients, or local pixel information, or a combination thereof.

7. A video quality objective assessment method according to claim 6, wherein in the step of performing the predetermined operation, as the statistic of motion vector data, a statistic concerning a magnitude or direction of motion vectors of all or some of macroblocks in the frame is used.

8. A video quality objective assessment method according to claim 6, wherein in the step of performing the predetermined operation, as the statistic of DCT coefficients, a statistic of DCT coefficients of all or some of macroblocks in the frame is used.

9. A video quality objective assessment method according to claim 6, further comprising the step of measuring a subjective quality improvement amount by various kinds of degradation concealment processing by conducting a subjective quality assessment experiment in advance, and creating a database,
wherein in the step of performing the operation of estimating the subjective quality, when objectively assessing the video quality, the database is referred to, and subjective quality tuned to each degradation concealment processing is derived.

10. A video quality objective assessment method according to claim 6, wherein in the step of performing the operation of estimating the subjective quality, the subjective quality improvement amount by the degradation concealment processing is estimated using the bit string of the encoded video or information decoded as local pixel signals.

11. A video quality objective assessment method according to claim 6, wherein in the step of performing the predetermined operation, as local pixel information, pixel information of a macroblock near a macroblock included in the lost bit string is used.

**12.** A video quality objective assessment method according to claim 1, wherein
in the step of performing the predetermined operation, if the information preserved in the lost bit string is encoding control information, a degree of influence on the subjective quality given by the encoding control information is calculated, and
in the step of performing the operation of estimating the subjective quality, the subjective quality of the video is estimated based on the operation result of the step of performing the predetermined operation.

**13.** A video quality objective assessment method according to claim 1, wherein in the step of performing the operation of estimating the subjective quality, when objectively assessing the video quality to estimate the subjective quality of the video, an assessment expression is optimized in accordance with one of an encoding method, a frame rate, and a resolution of the video.

**14.** A video quality objective assessment method according to any one of claims 1, 2, and 4, wherein the block is one of a frame, a slice, a macroblock, and a sub macroblock.

**15.** A video quality objective assessment apparatus for estimating subjective quality of a video experienced by a viewer who has viewed the video, thereby objectively assessing quality of the video, comprising:

a reception unit which receives a bit string of the video encoded using motion compensation and DCT;
an arithmetic unit which, if loss has occurred in the received bit string of the video, performs a predetermined operation using a lost bit string and a remaining bit string; and
an estimation unit which performs an operation of estimating the subjective quality of the video based on an operation result of the step of performing the predetermined operation,
wherein said arithmetic unit extracts one of spatial lost position information and time-series lost position information of one of a frame, a slice, a macroblock, and a sub macroblock preserved in the bit string, and
said estimation unit estimates the subjective quality of the video based on the extracted spatial position information or time-series position information.

**16.** A program which causes a computer to execute:

processing of receiving a bit string of a video encoded using motion compensation and DCT;
processing of, if loss has occurred in the received bit string of the video, extracting one of spatial lost position information and time-series lost position information of one of a frame, a slice, a macroblock, and a sub macroblock preserved in the bit string, and
processing of estimating the subjective quality of the video based on the extracted spatial position information or time-series position information.

**17.** A video quality objective assessment method according to claim 6, wherein in the step of performing the operation of estimating the subjective quality, a subjective quality improvement amount by degradation concealment processing is estimated using a value that expresses influence of degradation concealment processing in a spatial direction and a value that expresses influence of degradation concealment processing in a temporal direction.

**18.** A video quality objective assessment method according to claim 17, wherein the value that expresses the influence of degradation concealment processing in the spatial direction is calculated using similarity around a degradation region and a size of the degradation region.

**19.** A video quality objective assessment method according to claim 17, wherein the value that expresses the influence of degradation concealment processing in the temporal direction is calculated using a variation of a magnitude and direction of a motion vector between frames.

# FIG.1

COEFFICIENT DATABASE — D11

↓ F11

BIT STRING OF ENCODED VIDEO →

DEGRADATION REGION (POSITION AND COUNT) SPECIFYING FUNCTION UNIT — 11a: DEGRADATION INFORMATION

COEFFICIENT DATABASE — D14

↓ F14

11b: DEGRADATION INFORMATION   F12

WEIGHT DETERMINATION FUNCTION UNIT FOR DEGRADATION REGION — 12a: DEGRADATION AMOUNT INFORMATION

DEGRADATION REPRESENTATIVE VALUE DERIVING FUNCTION UNIT FOR SINGLE FRAME

14a: FRAME DEGRADATION REPRESENTATIVE VALUE

COEFFICIENT DATABASE — D15

COEFFICIENT DATABASE — D12

DEGRADATION REPRESENTATIVE VALUE DERIVING FUNCTION UNIT FOR ALL FRAMES — F15

F13   13a: DEGRADATION CONCEALMENT PROCESSING INFORMATION

DEGRADATION CONCEALMENT PROCESSING SPECIFYING FUNCTION UNIT

COEFFICIENT DATABASE — D16

↓ F16

COEFFICIENT DATABASE — D13

15a: ALL-FRAME DEGRADATION REPRESENTATIVE VALUE

SUBJECTIVE QUALITY ESTIMATION FUNCTION UNIT FOR ENCODING DEGRADATION

16a: ENCODING SUBJECTIVE QUALITY

D17 — COEFFICIENT DATABASE

F17 — SUBJECTIVE QUALITY ESTIMATION FUNCTION UNIT

↓

SUBJECTIVE QUALITY

EP 2 257 077 A1

# FIG.2

```
( START )
     │
     ▼
```

**PROCESSING OF FUNCTION UNIT F11**

| ACQUIRE BIT STRING OF ENCODED VIDEO | ~S11 |

| SCAN BIT STRING AND DETECT UNDECODABLE BLOCK | ~S12 |

| DETECT POSITIONS AND NUMBER OF UNDECODABLE BLOCKS | ~S13 |

**PROCESSING OF FUNCTION UNIT F12**

| READ OUT COEFFICIENT OF EDGE AMOUNT EXTRACTION EXPRESSION FROM COEFFICIENT DATABASE | ~S14 |

| EXTRACT EDGE AMOUNT OF VIDEO DEGRADATION PORTION BASED ON VIDEO FEATURE AMOUNT AND EDGE AMOUNT EXTRACTION EXPRESSION | ~S15 |

| READ OUT COEFFICIENT OF MOTION VECTOR (DIRECTION AND SIZE) EXTRACTION EXPRESSION FROM COEFFICIENT DATABASE | ~S16 |

| EXTRACT MOTION AMOUNT OF VIDEO DEGRADATION PORTION BASED ON VIDEO FEATURE AMOUNT AND MOTION VECTOR EXTRACTION EXPRESSION | ~S17 |

| READ OUT COEFFICIENT OF REGION-OF-INTEREST SETTING EXPRESSION | ~S18 |

| SET REGION OF INTEREST | ~S19 |

**PROCESSING OF FUNCTION UNIT F13**

| READ OUT DEGRADATION CONCEALMENT PROCESSING INFLUENCE AMOUNT CALCULATION EXPRESSION | ~S20 |

| CALCULATE DEGRADATION CONCEALMENT PROCESSING INFLUENCE AMOUNT | ~S21 |

**PROCESSING OF FUNCTION UNIT F14**

| READ OUT COEFFICIENT OF SINGLE-FRAME DEGRADATION REPRESENTATIVE VALUE DERIVING EXPRESSION | ~S22 |

| DERIVE SINGLE-FRAME DEGRADATION REPRESENTATIVE VALUE | ~S23 |

**PROCESSING OF FUNCTION UNIT F15**

| READ OUT COEFFICIENT OF ALL-FRAME DEGRADATION REPRESENTATIVE VALUE DERIVING EXPRESSION | ~S24 |

| DERIVE ALL-FRAME DEGRADATION REPRESENTATIVE VALUE | ~S25 |

**PROCESSING OF FUNCTION UNIT F16**

| READ OUT COEFFICIENT OF EXPRESSION FOR DERIVING SUBJECTIVE QUALITY BY ENCODING DEGRADATION | ~S26 |

| DERIVE SUBJECTIVE QUALITY BY ENCODING DEGRADATION | ~S27 |

**PROCESSING OF FUNCTION UNIT F17**

| READ OUT COEFFICIENT OF SUBJECTIVE QUALITY DERIVING EXPRESSION | ~S28 |

| DERIVE SUBJECTIVE QUALITY | ~S29 |

```
     │
     ▼
  ( END )
```

# FIG.3

| | | | | | | | |
|---|---|---|---|---|---|---|---|
| MACROBLOCK 11 | MACROBLOCK 12 | MACROBLOCK 13 | MACROBLOCK 14 | MACROBLOCK 15 | MACROBLOCK 16 | MACROBLOCK 17 | SLICE 1 (UPPER PORTION) |
| MACROBLOCK 21 | MACROBLOCK 22 | MACROBLOCK 23 | MACROBLOCK 24 | MACROBLOCK 25 | MACROBLOCK 26 | MACROBLOCK 27 | SLICE 2 (UPPER MIDDLE PORTION) |
| MACROBLOCK 31 | MACROBLOCK 32 | MACROBLOCK 33 | MACROBLOCK 34 | MACROBLOCK 35 | MACROBLOCK 36 | MACROBLOCK 37 | SLICE 3 (MIDDLE PORTION) |
| MACROBLOCK 41 | MACROBLOCK 42 | MACROBLOCK 43 | MACROBLOCK 44 | MACROBLOCK 45 | MACROBLOCK 46 | MACROBLOCK 47 | SLICE 4 (LOWER MIDDLE PORTION) |
| MACROBLOCK 51 | MACROBLOCK 52 | MACROBLOCK 53 | MACROBLOCK 54 | MACROBLOCK 55 | MACROBLOCK 56 | MACROBLOCK 57 | SLICE 5 (LOWER PORTION) |

# FIG.4

i = 1

ADJACENT MACROBLOCK 1 (PIXEL SIGNAL)

i = 4 → ADJACENT MACROBLOCK 4 (PIXEL SIGNAL) — LOSS MACROBLOCK (PIXEL INFORMATION) — ADJACENT MACROBLOCK 2 (PIXEL SIGNAL) ← i = 2

M PIXELS

ADJACENT MACROBLOCK 3 (PIXEL SIGNAL)

i = 3

# FIG.5

# FIG.6

# FIG.7

# FIG.8

# FIG.9

MOTION VECTOR
DERIVING TARGET FRAME

SUCCEEDING    PRECEDING

----- -3 -2 -1 0 +1 +2 +3 ----- → TIME

# FIG.10

REFERENCE
FRAME

MOTION VECTOR
DERIVING TARGET FRAME s

DISTANCE = r  DISTANCE = 1

MOTION VECTOR
MVst

VECTOR
MV'st

BLOCK
MBst

-(r+1) ----- -1 0 → TIME

# FIG.11

MOTION VECTOR
DERIVING TARGET FRAME i

REFERENCE
FRAME

DISTANCE = 1  DISTANCE = r

MOTION VECTOR
MVst

VECTOR
MV'st

BLOCK
MBst

0 1 ----- (r+1) → TIME

26

# FIG.12

| | | | | |
|---|---|---|---|---|
| MACROBLOCK 13 | MACROBLOCK 14 | MACROBLOCK 15 | MACROBLOCK 16 | MACROBLOCK 17 |
| MACROBLOCK 23 | MACROBLOCK 24 | MACROBLOCK 25 | MACROBLOCK 26 | MACROBLOCK 27 |
| MACROBLOCK 33 | MACROBLOCK 34 | MACROBLOCK 35 | MACROBLOCK 36 | MACROBLOCK 37 |
| MACROBLOCK 43 | MACROBLOCK 44 | MACROBLOCK 45 | MACROBLOCK 46 | MACROBLOCK 47 |
| MACROBLOCK 53 | MACROBLOCK 54 | MACROBLOCK 55 | MACROBLOCK 56 | MACROBLOCK 57 |

# FIG.13

FRAME

MACROBLOCK

UPPER SIDE OF FRAME

REGION 3 | REGION 2

REGION 4 | 45° | 45° | REGION 1

45° | 45°

LEFT SIDE OF FRAME — 45° | 45° — RIGHT SIDE OF FRAME

45° | 45°

REGION 5 | 45° | 45° | REGION 8

REGION 6 | REGION 7

LOWER SIDE OF FRAME

27

# FIG.14

COORDINATES (O, z)   ARBITRARY FRAME   COORDINATES (y, z)

z/4 (pixel)

z (pixel)   z/2 (pixel)   REGION OF INTEREST (CENTRAL REGION CORRESPONDING TO 50% VERTICAL AND HORIZONTAL LENGTHS)

z/4 (pixel)

COORDINATES (O, O)   COORDINATES (y, O)

y/4 (pixel)   y/2 (pixel)   y/4 (pixel)

y (pixel)

# FIG.15

Y

| MACROBLOCK (0.4) | MACROBLOCK (1.4) | MACROBLOCK (2.4) | MACROBLOCK (3.4) | MACROBLOCK (4.4) | MACROBLOCK (5.4) | MACROBLOCK (6.4) |
| MACROBLOCK (0.3) | MACROBLOCK (1.3) | MACROBLOCK (2.3) | MACROBLOCK (3.3) | MACROBLOCK (4.3) | MACROBLOCK (5.3) | MACROBLOCK (6.3) |
| MACROBLOCK (0.2) | MACROBLOCK (1.2) | MACROBLOCK (2.2) | MACROBLOCK (3.2) | MACROBLOCK (4.2) | MACROBLOCK (5.2) | MACROBLOCK (6.2) |
| MACROBLOCK (0.1) | MACROBLOCK (1.1) | MACROBLOCK (2.1) | MACROBLOCK (3.1) | MACROBLOCK (4.1) | MACROBLOCK (5.1) | MACROBLOCK (6.1) |
| MACROBLOCK (0.0) | MACROBLOCK (1.0) | MACROBLOCK (2.0) | MACROBLOCK (3.0) | MACROBLOCK (4.0) | MACROBLOCK (5.0) | MACROBLOCK (6.0) |

X

# FIG.16

INPUT VIDEO → H.264 ENCODER (6) → TRANSMISSION NETWORK → BIT STRING →

VIDEO QUALITY OBJECTIVE ASSESSMENT APPARATUS (1)

RECEPTION UNIT (2) → ARITHMETIC UNIT (3) → OUTPUT UNIT (5)

STORAGE MEDIUM (4) → ARITHMETIC UNIT

# FIG.17

| | | | | | | | |
|---|---|---|---|---|---|---|---|
| MACROBLOCK 11 | MACROBLOCK 12 | MACROBLOCK 13 | MACROBLOCK 14 | MACROBLOCK 15 | MACROBLOCK 16 | MACROBLOCK 17 | SLICE 1 |
| MACROBLOCK 21 | MACROBLOCK 22 | MACROBLOCK 23 | MACROBLOCK 24 | MACROBLOCK 25 | MACROBLOCK 26 | MACROBLOCK 27 | SLICE 2 |
| MACROBLOCK 31 | MACROBLOCK 32 | MACROBLOCK 33 | MACROBLOCK 34 | MACROBLOCK 35 | MACROBLOCK 36 | MACROBLOCK 37 | SLICE 3 |
| MACROBLOCK 41 | MACROBLOCK 42 | MACROBLOCK 43 | MACROBLOCK 44 | MACROBLOCK 45 | MACROBLOCK 46 | MACROBLOCK 47 | SLICE 4 |
| MACROBLOCK 51 | MACROBLOCK 52 | MACROBLOCK 53 | MACROBLOCK 54 | MACROBLOCK 55 | MACROBLOCK 56 | MACROBLOCK 57 | SLICE 5 |

# FIG.18

MOTION VECTOR OF
PERIPHERAL
MACROBLOCK 14
IN FRAME i-1

MOTION VECTOR OF
PERIPHERAL
MACROBLOCK 14
IN FRAME i

MOTION VECTOR OF
PERIPHERAL
MACROBLOCK 14
IN FRAME i+1

DERIVE INNER
PRODUCT IP$_{14i}$

DERIVE INNER
PRODUCT IP$_{14(i+1)}$

DERIVE AVERAGE
INNER PRODUCT AIP$_{14i}$

# EP 2 257 077 A1

<table>
<tr><td colspan="2" align="center"><strong>INTERNATIONAL SEARCH REPORT</strong></td><td colspan="2">International application No.<br>PCT/JP2009/055681</td></tr>
</table>

| A. CLASSIFICATION OF SUBJECT MATTER |
| --- |
| *H04N17/00*(2006.01)i, *H04N7/30*(2006.01)i |

According to International Patent Classification (IPC) or to both national classification and IPC

| B. FIELDS SEARCHED |
| --- |

Minimum documentation searched (classification system followed by classification symbols)
H04N17/00, H04N7/30

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2007-43642 A  (Nippon Telegraph And Telephone Corp.), 15 February, 2007 (15.02.07), Full text; all drawings (Family: none) | 1-19 |
| A | JP 2000-341688 A  (Ando Electric Co., Ltd.), 08 December, 2000 (08.12.00), Full text; all drawings & US 6591396 B1       & DE 10026726 A1 | 1-19 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 June, 2009 (09.06.09) | 30 June, 2009 (30.06.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

31

**REFERENCES CITED IN THE DESCRIPTION**

**Non-patent literature cited in the description**

- **Masataka Masuda ; Toshiko Tominaga ; Takanori Hayashi.** Non-intrusive Quality Management for Video Communication Services by using Invalid Frame Rate. *Technical Report of IEICE,* September 2005, vol. 59, 55-60